# EUROPEAN PATENT SPECIFICATION

(11) **EP 0 367 574 B1**
(45) Date of publication and mention of the grant of the patent: **09.03.1994**
(21) Application number: 89311261.5
(22) Date of filing: 31.10.1989
(51) Int. Cl.: B01D 53/36

(54) **Ozone decomposition catalyst and method**
Katalysator und Verfahren zur Zersetzung von Ozon
Catalyseur et méthode de décomposition d'ozone

(30) Priority: 31.10.1988 JP 277090/88; 14.02.1989 JP 35304/89
(43) Date of publication of application: 09.05.1990
(73) Proprietor: SAKAI CHEMICAL INDUSTRY CO., LTD., Sakai Osaka (JP)
(72) Inventor: Yoshimoto, Masafumi, Sakai Osaka (JP); Nakatsuji, Tadao, Sakai Osaka (JP); Nagano, Kazuhiko, Sakai Osaka (JP)
(74) Representative: Geering, Keith Edwin

(56) References cited:
- EP-A- 0 257 307
- EP-A- 0 275 620
- EP-A- 0 290 947
- EP-A- 0 292 310
- EP-A- 0 362 960
- DE-A- 3 003 793
- FR-A- 2 321 900

## Description

This invention relates to a catalyst for decomposing ozone (contained, for example, in the air ).

There have been proposed various methods of decomposing noxious ozone contained in the air - for example adsorption using a porous material such as activated carbon or zeolite, or oxidative decomposition using a catalyst such as MnO₂.

However, these methods are not satisfactory. The adsorption method has the disadvantage that the adsorbant must be regenerated; moreover, maintenance of the ozone removing equipment requires much labor and expense. Oxidative decomposition has no such disadvantages, but the known catalysts have insufficient activity; we have investigated the durability of a variety of ozone decomposing catalysts, and found that in general catalysts deteriorate markedly in activity when they are used under severe conditions of high ozone concentration with large area velocity.

EP-A-0275620 discloses ozone treatment catalysts containing titania/silica or titania/P₂O₅ composites together with Fe, Mn, Co, Ni or Ag oxide or Pt, Pd or Rh. DE-A-3003793 discloses ozone treatment catalysts containing Ag, Cu and Ni oxides. FR-A-2321900 discloses ozone treatment catalysts containing Ag and Mn oxides.

The present invention provides a catalyst for decomposing ozone which comprises a metal oxide of formula xMnO₂·yAg₂O·zTiO₂ wherein x, y and z represent weight proportions, x is 0.2-0.8, y is 0.1-0.7, z is 0.1-0.7, and $\text{x + y + z = 1}$ .

The catalyst is not limited to any specific form, and for example may be in the form of honeycombs, pellets, cylinders, plates or pipes.

The catalyst preferably contains the active components in amounts of not less than 50 wt.%, more preferably in amounts of not less than 75 wt.%.

The catalyst may be produced by any known methods such as impregnating, kneading, coprecipitating, precipitating or oxide admixing methods. In the production of the catalyst, there may be used molding assistants to provide plasticity with the active component used, reinforcements such as inorganic fibers to increase mechanical strength of the catalyst obtained, or organic binders.

The ozone decomposition is best carried out at temperatures of 0-40°C, preferably of 10-30°C. When the reaction temperature is less than 0°C, the reaction volocity may be too slow, whereas when more than 40°C, heat energy is needed and this is undesirable from the standpoint of energy economy.

A gas which contains ozone is best contacted with the catalyst at an area velocity of 5-50, wherein the area velocity is the space velocity (hr⁻¹) divided by gas contact area per unit volume (m²/m³) of the catalyst. When the area velocity is less than 5, an undesirably large volume of catalyst may be needed whereas when it is over 50, the ozone decomposition rate may be too low.

When ozone is decomposed under mild conditions of a small CA value(which is the product of ozone concentration at the reactor inlet and area velocity), there is substantially no deterioration of the catalyst. However, many catalysts rapidly deteriorate when the reaction is carried out under severe conditions of a CA value of not less than 30.

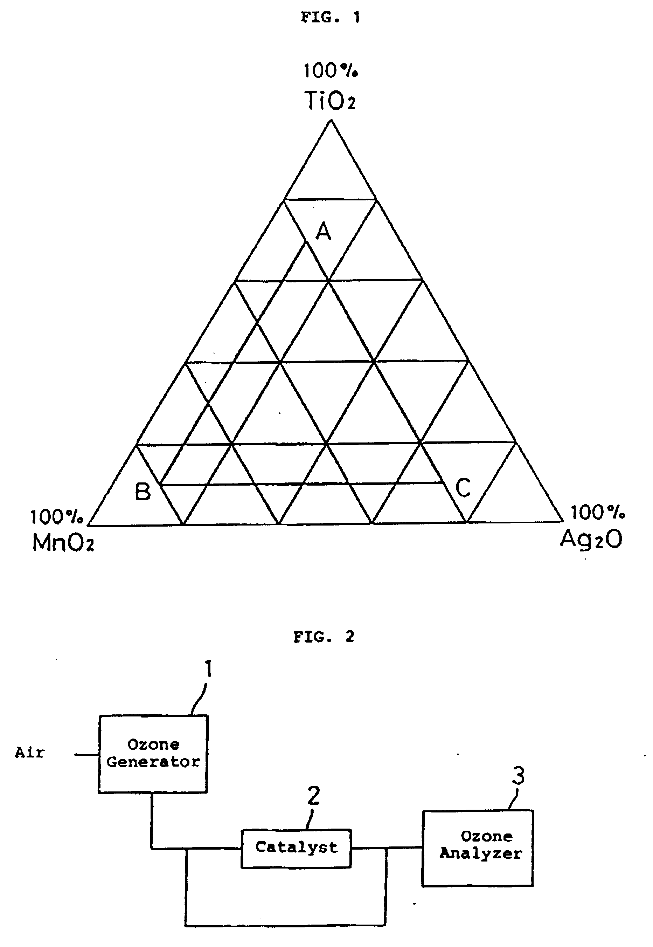

The catalyst according to the invention contains a ternary metal oxide of formula xMnO₂· yAg₂O·zTiO₂ wherein weight proportion coordinates (x, y, z) of the oxide on a triangular diagram are either on sides of a triangle formed by connecting three points (20, 10, 70), (80, 10, 10) and (20, 70, 10) with straight lines or within the triangle, as illustrated in Fig. 1. This catalyst of the invention does not deteriorate under severe conditions of a CA value of not less than 30.

The catalyst of the invention may further contain at least one metal selected from Pt, Ru, Re, Os, Rh, Ir and Pd, or an oxide thereof, and/or Au.

The invention will now be described in more detail with reference to Examples; however, the invention is not limited thereto. Reference will also be made to the accompanying drawings, in which :
FIGURE 1 is a triangular diagram which illustrates the compositions of preferred ozone decomposition catalysts of the invention; and
FIGURE 2 is a flow sheet for measurement of catalyst activity.

### A. Preparation of Catalysts

### Example 1

250 g of manganese dioxide (MnO₂) and 103g of silver oxide (Ag₂O) were added to 1034 ml of titania sol (TiO₂ content: 150 g/l). There were further added thereto 250 g of glass beads, and the mixture was stirred to form slurry precipitates.

The slurry was impregnated into a honeycomb formed with corrugates of ceramic fibers having a porosity of 81% and a pitch of 4.0 mm to provide a ternary catalyst having MnO₂·Ag₂O·TiO₂ (50/20/30 in weight ratio) supported thereon in a support ratio of 101 %.

### Example 2

1034 ml of titania sol, 155 g of manganese dioxide, 207 g of silver oxide and 250 g of glass beads were used as in Example 1 to give a ternary catalyst having MnO₂·Ag₂O·TiO₂ (30/40/30 in weight ratio) supported thereon in a support ratio of 98 %.

### Example 3

2411 ml of titania sol, 103 g of manganese dioxide, 52 g of silver oxide and 250 g of glass beads were used as in Example 1 to give a ternary catalyst which had MnO₂-Ag₂O-TiO₂ (20/10/70 in weight ratio) supported thereon in a support ratio of 105 %.

### Example 4

1034 ml of titania sol, 1240 g of manganese dioxide, 155 g of silver oxide and 250 g of glass beads were used as in Example 1 to give a ternary catalyst which had MnO₂-Ag₂O-TiO₂ (80/10/10 in weight ratio) supported thereon in a support ratio of 101 %.

### Example 5

1034 ml of titania sol, 310 g of manganese dioxide, 1085 g of silver oxide and 250 g of glass beads were used as in Example 1 to give a ternary catalyst which had MnO₂-Ag₂O-TiO₂ (20/70/10 in weight ratio) supported thereon in a support ratio of 103 %.

### Example 6

1034 ml of titania sol, 78 g of manganese dioxide, 155 g of silver oxide and 250 g of glass beads were used as in Example 1 to give a ternary catalyst which had MnO₂-Ag₂O-TiO₂ (20/40/40 in weight ratio) supported thereon in a support ratio of 99 %.

### Example 7

1034 ml of titania sol, 194 g of manganese dioxide, 39 g of silver oxide and 250 g of glass beads were used as in Example 1 to give a ternary catalyst which had MnO₂-Ag₂O-TiO₂ (50/10/40 in weight ratio) supported thereon in a support ratio of 95 %.

### Example 8

1034 ml of titania sol, 775 g of manganese dioxide, 620 g of silver oxide and 250 g of glass beads were used as in Example 1 to give a ternary catalyst which had MnO₂-Ag₂O-TiO₂ (50/40/10 in weight ratio) supported thereon in a support ratio of 102 %.

### Example 9

1034 ml of titania sol, 465 g of manganese dioxide, 155 g of silver oxide and 250 g of glass beads were used as in Example 1 to give a ternary catalyst which had MnO₂-Ag₂O-TiO₂ (60/20/20 in weight ratio) supported thereon in a support ratio of 102 %.

### Reference Example 1

1034 ml of titania sol, 52 g of manganese dioxide, 310 g of silver oxide and 250 g of glass beads were used as in Example 1 to give a ternary catalyst which had MnO₂-Ag₂O-TiO₂ (10/60/30 in weight ratio) supported thereon in a support ratio of 98 %.

### Reference Example 2

1034 ml of titania sol, 90 g of manganese dioxide, 13 g of silver oxide and 250 g of glass beads were used as in Example 1 to give a ternary catalyst which had MnO₂-Ag₂O-TiO₂ (35/5/60 in weight ratio) supported thereon in a support ratio of 100 %.

### Reference Example 3

1034 ml of titania sol, 1395 g of manganese dioxide, 1550 g of silver oxide and 250 g of glass beads were used as in Example 1 to give a ternary catalyst which bad MnO₂-Ag₂O-TiO₂ (45/50/5 in weight ratio) supported thereon.

### Example 10

The ternary catalyst (water absorption: 39.0 %) prepared in Example 1 was immersed in an aqueous solution of chloroplatinic acid (Pt content: 2.56 g/l). After removal of excess solution therefrom, the catalyst was air dried at normal temperature. Then the catalyst was dried at a temperature of 100°C over eight hours, and then calcined at a temperature of 500°C for three hours, to provide a four component catalyst containing platinum in amounts of 0.1 % by weight in terms of metallic platinum.

### Example 11

An aqueous solution of ruthenium trichloride (Ru content: 2.56 g/l) was used in place of the aqueous solution of chloroplatinic acid in Example 10 to give a four component catalyst containing ruthenium in amounts of 0.1 % by weight in terms of metallic ruthenium.

### Example 12

An aqueous solution of rhenium trichloride (Re content: 2.56 g/l) was used in place of the aqueous solution of chloroplatinic acid in Example 10 to give a four component catalyst containing rhenium in amounts of 0.1 % by weight in terms of metallic rhenium.

### Example 13

An aqueous solution of osmium trichloride (Os content; 2.56 g/l) was used in place of the aqueous solution of chloroplatinic acid in Example 10 to give a four component catalyst containing osmium in amounts of 0.1 % by weight in terms of metallic osmium.

### Example 14

An aqueous solution of rhodium trichloride (Rh content: 2.56 g/l) was used in place of the aqueous solution of chloroplatinic acid in Example 10 to give a four component catalyst containing rhodium in amounts of 0.1 % by weight in terms of metallic rhodium.

### Example 15

An aqueous solution of iridium tetrachloride (Ir content: 2.56 g/l) was used in place of the aqueous solution of chloroplatinic acid in Example 10 to give a four component catalyst containing iridium in amounts of 0.1 % by weight in terms of metallic iridium.

### Example 16

An aqueous solution of palladium dichloride (Pd content: 2.56 g/l) was used in place of the aqueous solution of chloroplatinic acid in Example 10 to give a four component catalyst containing palladium in amounts of 0.1 % by weight in terms of metallic palladium.

### Example 17

An aqueous solution of auric chloride (Au content: 2.56 g/l) was used in place of the aqueous solution of chloroplatinic acid in Example 1 to give a four component catalyst containing gold in amounts of 0.1 % by weight in terms of metallic gold.

### Reference Example 4

The ternary catalyst (water absorption: 41.0 %) prepared in Reference Example 1 was immersed in an aqueous solution of chloroplatinic acid (Pt content: 2.44 g/l). After removal of excess solution therefrom, the catalyst was air dried at normal temperature. Then the catalyst was dried at a temperature of 100°C over eight hours, and then calcined at a temperature of 500°C for three hours, to provide a four component catalyst containing platinum in amounts of 0.1 % by weight in terms of metallic platinum.

### B. Measurement of Catalyst Activity

The activity of the catalysts prepared in Examples 1-17 and Reference Examples 1-4 was measured in accordance with the flow sheet shown in Fig. 2, in which 1 designates an ozone generator, into which air is introduced to generate ozone in on appropriate concentration. The air containing ozone is then sent to a catalyst reactor 2. The ozone concentration in the air is determined with an ozone analyzer 3 at the inlet and outlet of the reactor. Ozone decomposition rate (%) is calculated as [(ozone concentration at inlet - ozone concentration at outlet)/ozone concentration at inlet] x 100.

The reaction conditions were as follows:
Space velocity: 20000 hr⁻¹
Temperature: 20°C

In the measurement with the catalysts of Examples 1-17 and Reference Examples 1-4, ozone concentration at the inlet of the reactor and area velocity were varied so that CA values were 10, 30 and 50, and the ozone decomposition rate was measured at the initial stage, after one hour and two hours, to evaluate durability of the catalyst.

The results are in Tables 1-6, which show that the catalysts of Examples 1-17 do not deteriorate under CA values of 10, 30 or 50; the catalysts of Reference Examples 1-4, with proportions of active components not as for the invention, deteriorate under CA values of not less than 30, though not under a CA value of 10.

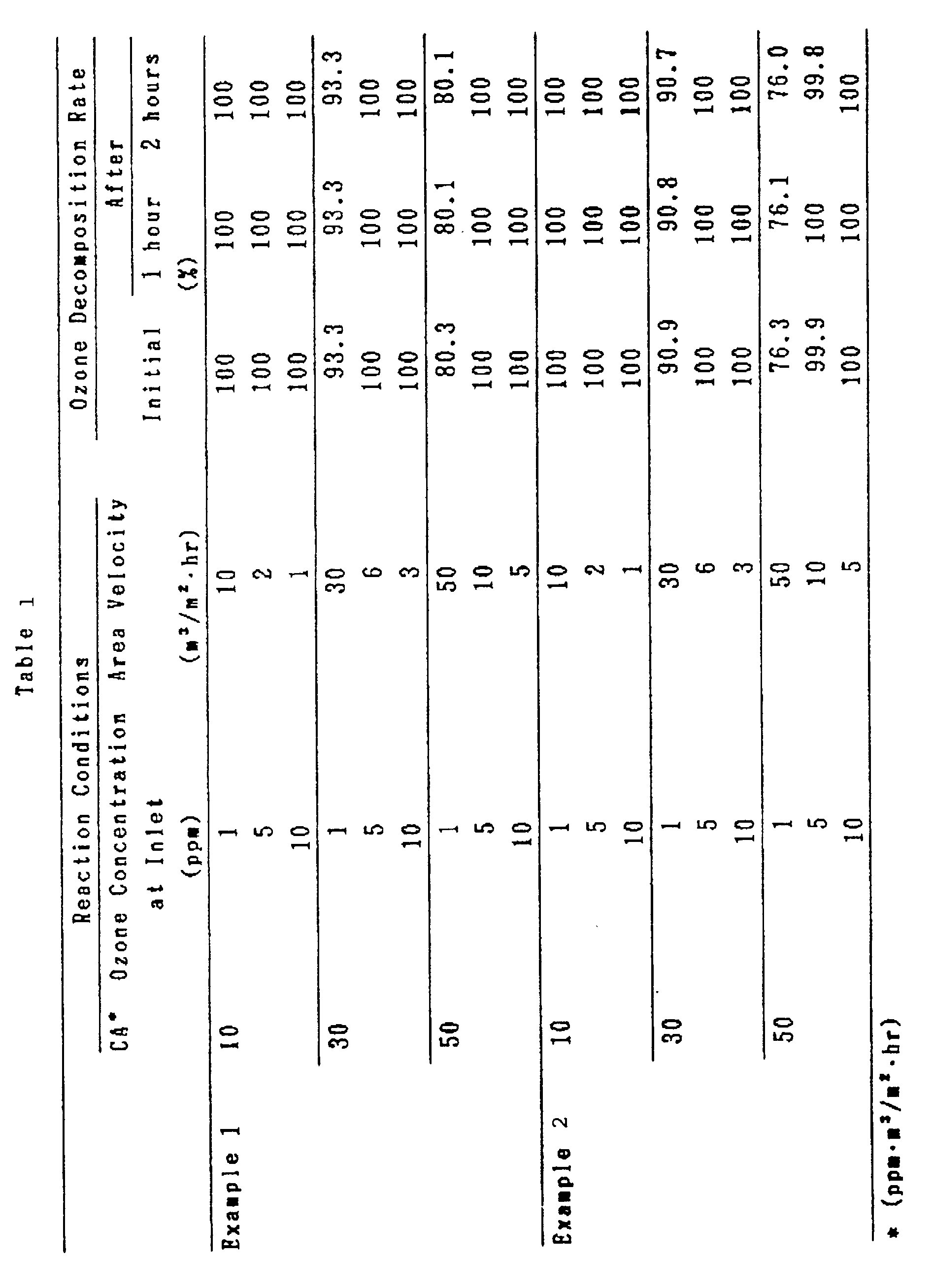

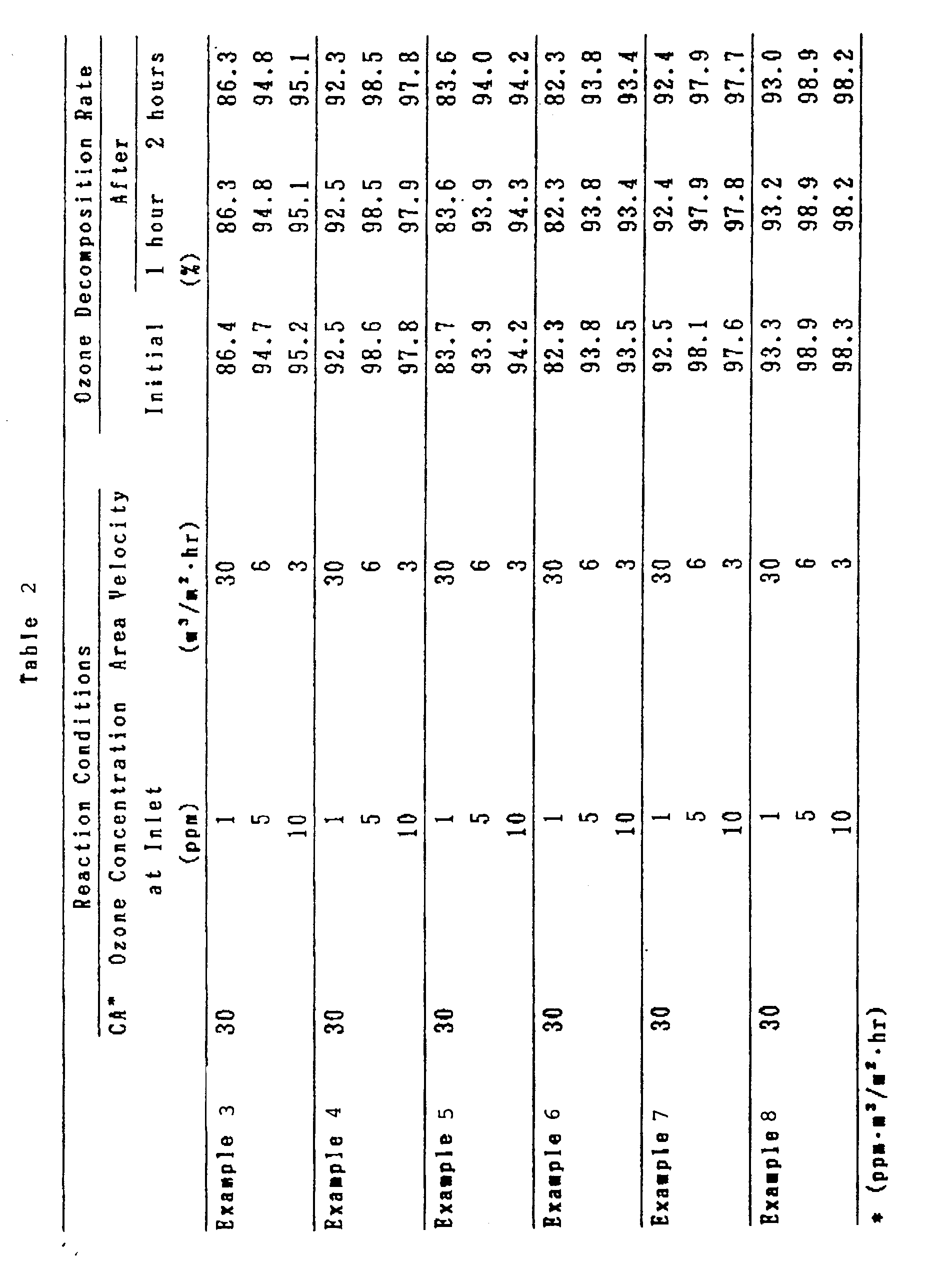

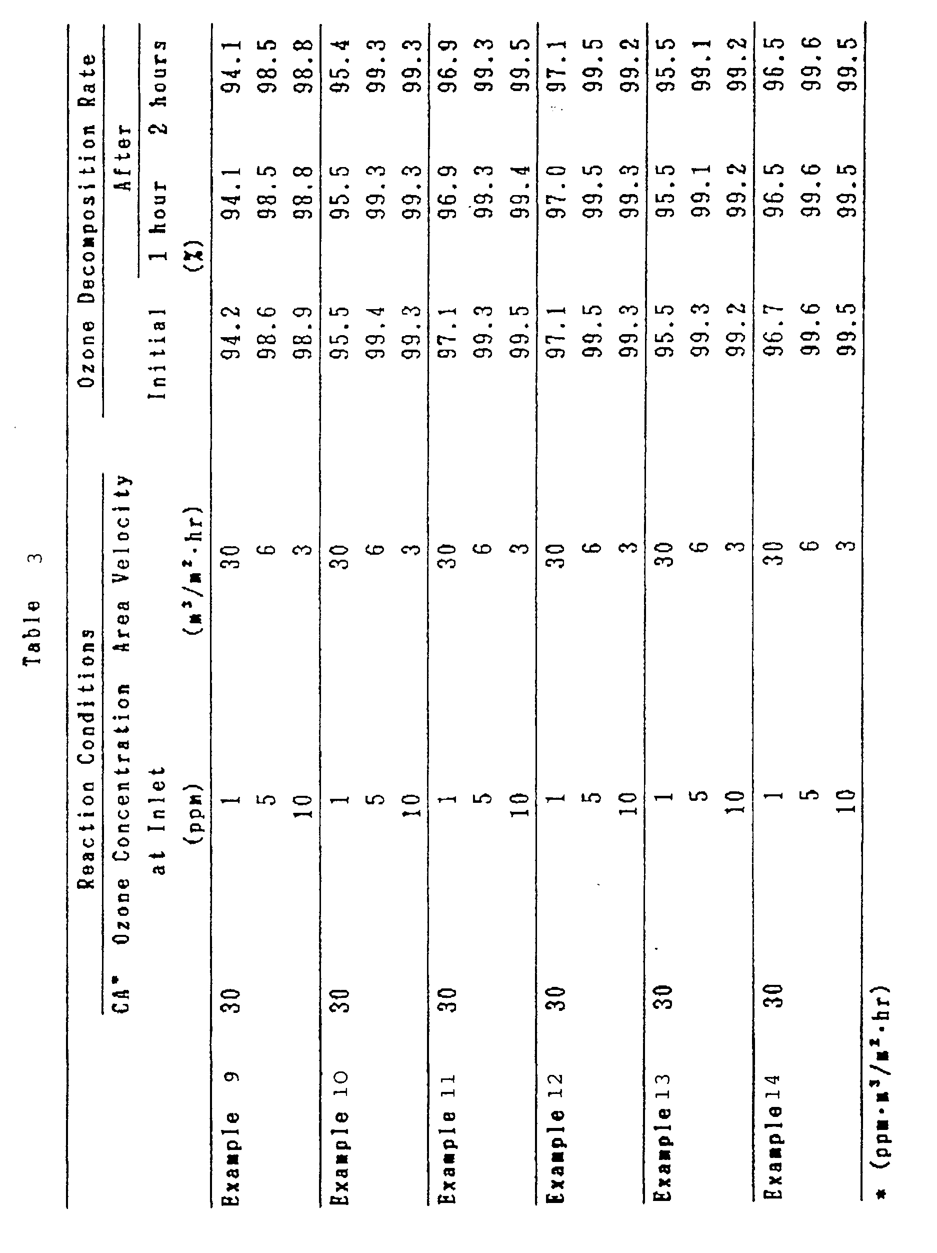

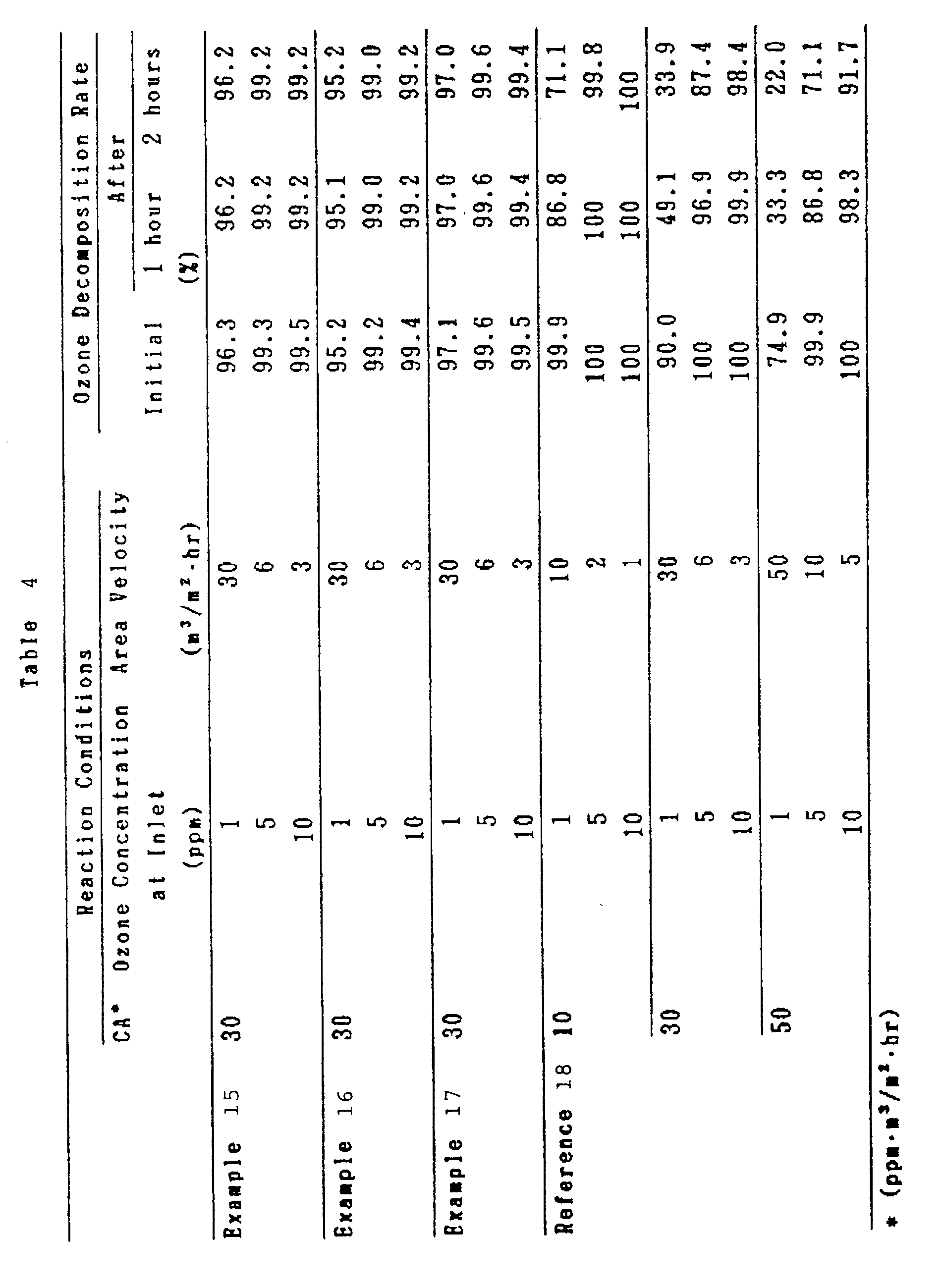

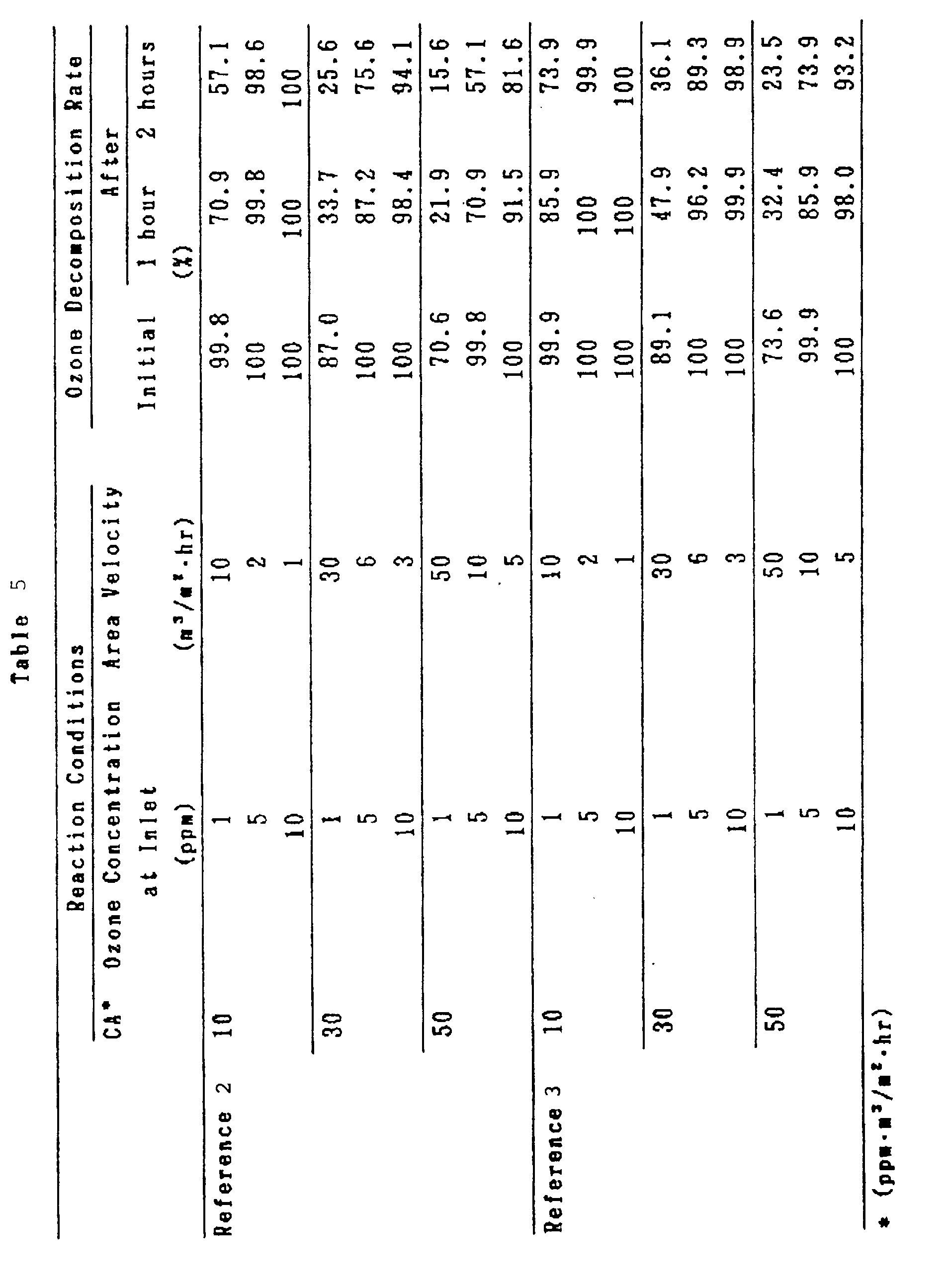

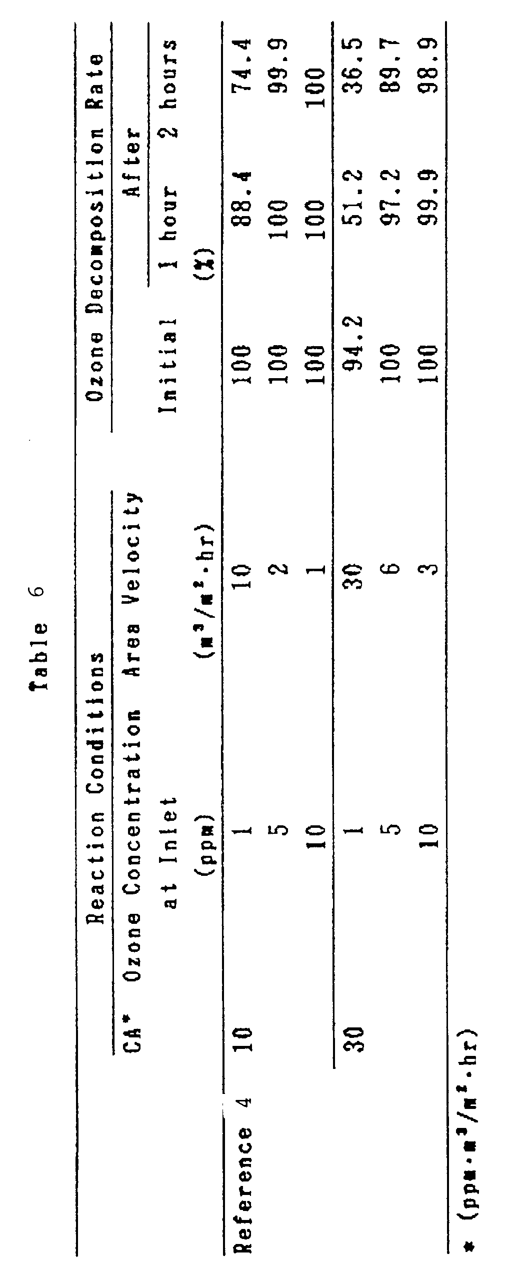

## Claims

1. A catalyst for ozone decomposition which comprises a metal oxide of formula xMnO₂·yAg₂O·zTiO₂ wherein x, y and z represent weight proportions, x is 0.2-0.8, y is 0.1-0.7, z is 0.1-0.7, and $\text{x + y + z = 1}$ 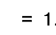 .

2. A catalyst according to claim 1 containing not less than 50 wt.% of said metal oxide.

3. A catalyst according to claim 2 containing not less than 75 wt.% of said metal oxide.

4. A catalyst according to any preceding claim including one component selected from Pt, Ru, Re, Os, Rh, Ir, Pd or Au.

5. A method of decomposing ozone which comprises contacting it with catalyst according to any preceding claim.

6. A method according to claim 5 conducted at 0-40°C.

7. A method according to claim 5 or 6 conducted at an area velocity of 5 to 50 m³/m².hr.

## Patentansprüche

1. Katalysator zum Ozonabbau, umfassend ein Metalloxid der Formel xMnO₂·yAg₂O·zTiO₂, wobei x, y und z Gewichtsanteile angeben und x = 0,2-0,8, y = 0,1-07, z = 0,1-07 und $\text{x + y + z = 1}$ .

2. Katalysator nach Anspruch 1, enthaltend nicht weniger als 50 Gew.-% des Metalloxids.

3. Katalysator nach Anspruch 2, enthaltend nicht weniger als 75 Gew.-% des Metalloxids.

4. Katalysator nach einem der vorangehenden Ansprüche, enthaltend eine Komponente, ausgewählt aus Pt, Ru, Re, Os, Rh, Ir, Pd oder Au.

5. Verfahren zum Abbau von Ozon, umfassend das Zusammenbringen mit einem Katalysator nach einem der vorangehenden Ansprüche.

6. Verfahren nach Anspruch 5, das bei 0-40°C durchgeführt wird.

7. Verfahren nach Anspruch 5 oder 6, das mit einer Flächengeschwindigkeit von 5 bis 50 m³/m²·h durchgeführt wird.

## Revendications

1. Catalyseur pour décomposer l'ozone, qui comprend un oxyde métallique de formule xMnO_{2.}yAg₂O·zTiO₂ où x, y et z représentent des proportions pondérales, x est 0,2 à 0,8, y est 0,1 à 0,7, z est 0,1 à 0,7, et $\text{x+y+z=1}$ .

2. Catalyseur selon la revendication 1, ne contenant pas moins de 50 % en poids dudit oxyde métallique.

3. Catalyseur selon la revendication 2, ne contenant pas moins de 75 % en poids dudit oxyde métallique.

4. Catalyseur selon l'une quelconque des revendications précédentes, incluant un composant choisi parmi Pt, Ru, Re, Os, Rh, Ir, Pd et Au.

5. Procédé de décomposition de l'ozone, qui comprend la mise en contact de celui-ci avec un catalyseur selon l'une quelconque des revendications précédentes.

6. Procédé selon la revendication 5, effectué à 0-40 °C.

7. Procédé selon la revendication 5 ou 6, exécuté à une vélocité aréolaire de 5 à 50 m³/m²·h.
